# EUROPÄISCHE PATENTANMELDUNG

(11) **EP 2 615 035 A2**
(43) Veröffentlichungstag der Anmeldung: **17.07.2013**
(21) Anmeldenummer: 12199167.3
(22) Anmeldetag: 21.12.2012
(51) Int. Cl.: B64F 1/00

(54) **Abdeckplane für Flugzeugtriebwerke**

(30) Priorität: 12.01.2012 DE 202012100112 U
(71) Anmelder: Rinck, Klaus, 21723 Hollern-Twielenfleth (DE)
(72) Erfinder: Rinck, Klaus, 21723 Hollern-Twielenfleth (DE)
(74) Vertreter: Hansen, Jochen

(57) **Zusammenfassung**

Die Erfindung betrifft eine Abdeckplane (1) für einen im Wesentlichen kreisrunden Querschnitt aufweisenden Lufteinlauf (20) eines Flugzeugstrahltriebwerks (2), die den Lufteinlauf (20) überdeckt und an in einer Verkleidung (21) des Strahltriebwerks (2) vorgesehenen Bohrungen (22) mittels Kugelsperrbolzen (13) lösbar befestigt ist, wobei ein für den Lufteinlauf (20) passender, kappenförmiger Schnitt mit einem umlaufenden Rand (11), der auf der Verkleidung (21) des Strahltriebwerks (2) aufliegt, vorgesehen ist, wobei der Rand (11) bis über die Bohrungen (22) in der Verkleidung (21) reicht und im Rand (11) den Bohrungen (22) zugeordnete Durchstecköffnungen (12) vorgesehen sind.

## Beschreibung

Die Erfindung betrifft eine Abdeckplane für einen im Wesentlichen kreisrunden Querschnitt aufweisenden Lufteinlauf eines Flugzeugstrahltriebwerks, die den Lufteinlauf überdeckt und an in einer Verkleidung des Strahltriebwerks vorgesehenen Bohrungen mittels Kugelsperrbolzen lösbar befestigt ist.

Derartige Abdeckplanen sind für Flugzeugstrahltriebwerke in Form einer kreisförmigen, ebenen Plane, die den im Wesentlichen kreisrunden Querschnitt des Lufteinlaufs überdeckt, bekannt. Dabei ist an der Kante umlaufend ein Spannband in einem Nahttunnel angeordnet. Der Nahttunnel ist an den Befestigungspositionen, nämlich den zugeordneten Bohrungen in der Verkleidung des Strahltriebwerks unterbrochen, so dass dort das Spannband mittels einer Lasche mit einem Kugelsperrbolzen in der jeweilig zugeordneten Bohrung in der Verkleidung des Triebwerkes des Flugzeugs festsetzbar ist.

Nachteilig an dieser Vorrichtung ist, dass der über den Rand des Lufteinlaufs des Strahltriebwerks gespannte Teil der Abdeckplane Falten schlägt und die gesamte Abdeckplane auf dem glatten Rand des Strahltriebwerks aufgrund einer unvermeidlichen Lose im Spannband in gewissen Grenzen verrutschen kann. Die Verschiebbarkeit und Lose der Abdeckplane bedeutet zudem eine unnötige Beanspruchung der zu schützenden Oberflächen am Strahltriebwerk, insbesondere bei Wind induzierten Flatterbewegungen.Darüber hinaus liegen die Kugelsperrbolzen, die mit einem Sicherungsband an der Befestigungslasche gesichert sind, bei der Montage und Demontage der Abdeckplane lose baumelnd vor, so dass die Gefahr von Beschädigungen an den sehr empfindlichen Luftschaufeln des Triebwerks sowie eine Verletzungsgefahr für das Bedienpersonal besteht.

Ferner ist es aus der DE 20 2007 018 049 eine aufblasbare Abdeckung für den Lufteinlauf von Strahltriebwerken bekannt. Die Abdeckung ist jedoch lediglich durch einen aufblasbaren Ring in der Innenseite des Triebwerks eingelegt und weist eine über den Ring gespannte Abdeckfolie auf, so dass das Triebwerk vor Verschmutzungen und Beschädigungen geschützt ist, jedoch keine formschlüssige Verbindung der Abdeckplane mit dem Triebwerk besteht. Damit dürfte diese Vorrichtung nur für den Einsatz in Hallen etc. geeignet sein, da keine ausreichende Windfestigkeit erreicht werden kann.

Ausgehend vom erstgenannten Stand der Technik ist es Aufgabe der Erfindung, eine Abdeckplane für Flugzeugstrahltriebwerke anzugeben, die eine hohe Betriebssicherheit und einen geringen Verschleiß bewirkt.

Gelöst wird diese Aufgabe mit einer Abdeckplane gemäß Anspruch 1. Durch den kappenförmigen Schnitt wird eine passgenaue, deckelartige Abdeckplane erzielt, die um den Lufteinlauf des Strahltriebwerks umlaufend plan ohne Falten aufliegt und mittels der darin vorgesehenen Durchstecköffnungen in bekannter Weise mit den Kugelsperrbolzen gesichert werden kann. Durch die vom Zuschnitt herrührende genaue Passform ist ein Verrutschen und Flattern der Abdeckung bei Windbeanspruchung und dergleichen auszuschließen.

Wenn im Bereich jeder Durchstecköffnung eine Klappe im Rand ausgebildet ist, kann auch bei bereits aufgeschobener deckelartiger Abdeckplane die Lage der in der Verkleidung des Strahltriebwerks angeordneten Aufnahmebohrungen für die Kugelsperrbolzen im Bereich der Klappe ermittelt und der Kugelsperrbolzen durch die Durchstecköffnung in die Bohrung von der Bedienperson gesteckt werden. Ein langes Suchen der entsprechenden Bohrung ist somit entbehrlich.

Dadurch, dass die Klappe trapezförmig ausgebildet ist, wobei die Seite der Trapezklappe fest mit dem Rand verbunden ist und nach vorn zeigt, werden die Zugkräfte zum Spannen der über den Lufteinlauf gelegten Abdeckplane wirkungsvoll über die Durchstecköffnung und den Kugelsperrbolzen in die Bohrung der Strahltriebwerksverkleidung eingeleitet.

Um eine optimale Sichtkontrolle bei der Ausrichtung der Abdeckplane zu den Aufnahmebohrungen für die Kugelsperrbolzen sicherzustellen, ist die Durchstecköffnung zentral in der Klappe angeordnet.

Wenn eine Verwahrtasche für jeden Kugelsperrbolzen auf dem Rand nahe jeder Durchstecköffnung vorgesehen ist, können bei Nichtgebrauch bzw. bei Demontage der Abdeckplane die Kugelsperrbolzen sicher in den Verwahrtaschen aufgenommen werden. Sie können dann nicht freihängend an ihren Sicherheitsbändern gegen die empfindlichen Luftschaufeln schlagen oder das Bedienperson verletzen. Beim Verpacken der Abdeckplane stören die sonst freihängenden Kugelsperrbolzen nicht mehr und können sich nicht unerwünscht mit anderen Bauteilen verklemmen. Um ein einfaches Entnehmen und Verschließen der Verwahrtaschen sicherzustellen, weist die Verwahrtasche einen Klettverschluss auf.

Wenn jeder Kugelsperrbolzen mit einem Sicherungsband nahe der jeweiligen Durchstecköffnung am Rand befestigt ist, sind die Kugelsperrbolzen fest mit der Abdeckplane verbunden und können nicht verloren gehen.

Nachfolgend wird ein Beispiel der Erfindung anhand der beiliegenden Zeichnungen detailliert beschrieben.

Darin zeigt:
- Fig. 1: in einer räumlichen Ansicht eine auf einem Strahltriebwerk montierte Abdeckplane und
- Fig. 2: im Detail eine Befestigungsstelle der Abdeckplane.

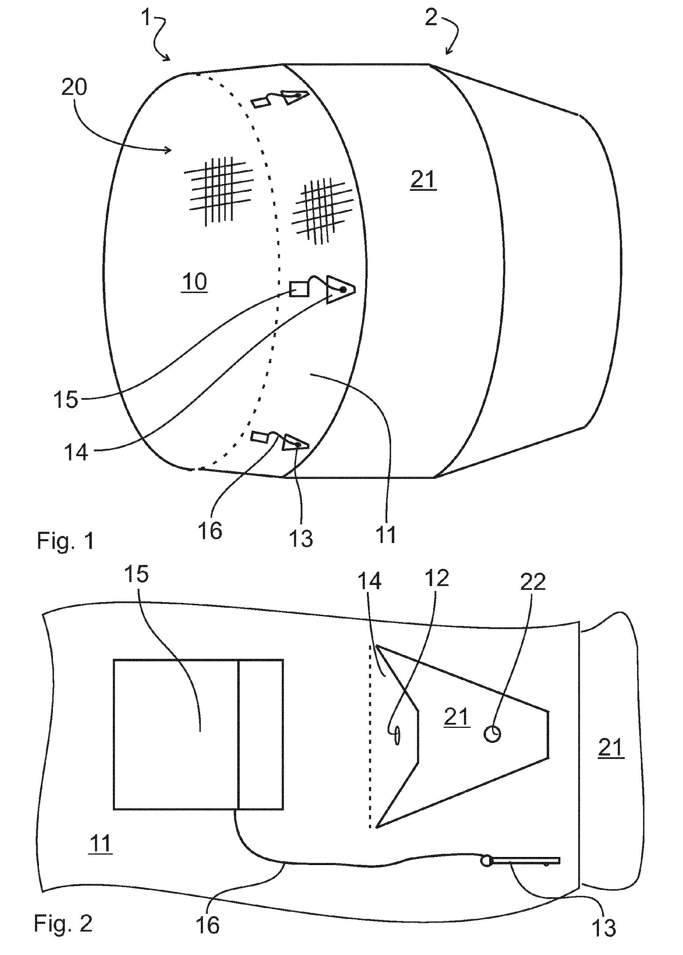

In Fig. 1 ist in räumlicher Ansicht eine Abdeckplane 1 für einen im Wesentlichen kreisrunden Querschnitt aufweisenden Lufteinlauf 20 eines mit einer Verkleidung 21 versehenen Flugzeugstrahltriebwerks 2 dargestellt. Der Lufteinlauf 20 wird von der Abdeckplane 1 mit ihrem kreisrunden, flächigen Zentralteil 10 schützend abgedeckt. Um das kreisrunde Zentralteil 10 der Abdeckplane 1 ist ein Rand 11 so angenäht, dass der Rand 11 auf der Verkleidung 21 des Triebwerks 2 um die Lufteinlauföffnung 20 umlaufend aufliegt. Somit bildet die Abdeckplane 1 mit ihrem Zentralteil 10 und dem Rand 11 eine deckelartige Kappe.

Der Rand 11 weist dabei eine ausreichende Breite auf, so dass in der Verkleidung 21 vorgesehene Bohrungen 22 von dem Rand 11 der Abdeckplane 1 überdeckt sind. Den Bohrungen 22 in der Verkleidung 21 sind Durchstecköffnungen 12 im Rand 11 zugeordnet, so dass bei entsprechender Ausrichtung der Abdeckplane 1 auf dem Strahltriebwerk 2 dafür vorgesehene Kugelsperrbolzen 13 durch die Durchstecköffnung 12 in die Bohrung 22 einsteckbar sind, wie es in Fig. 2 im Detail in einem Ausschnitt dargestellt ist. Beispielsweise sind in Umfangsrichtung in dem Rand acht gleichbeabstandete Durchstecköffnungen 12 korrespondierend zu den entsprechenden acht Bohrungen 22 im Triebwerk 2 angeordnet.

Um die Ausrichtung der Abdeckplane 1 auf dem Strahltriebwerk 2, insbesondere zur fluchtenden Ausrichtung der Durchstecköffnungen 12 zu den Bohrungen 22 zu erleichtern, ist im Bereich jeder Durchstecköffnung 12 im Rand 11 der Abdeckplane 1 eine Klappe 14 angeordnet, die im dargestellten Ausführungsbeispiel Trapezform aufweist und an ihrer langen Seite mit dem Rand 11 der Plane 1 fest verbunden ist. Die Klappe 14 kann dabei bevorzugt mit einer an der kurzen Seite angebrachten Handhabungslasche um die lange Seite der trapezförmigen Klappe quasi als Scharnier aufgeklappt werden, um darunter die Bohrung 22 der Verkleidung 21 sehen und zentrieren zu können. Nach dem Herunterklappen der Klappe 14 kann dann der Kugelsperrbolzen durch die in der Klappe 14 zentral angeordnete Durchstecköffnung 12 in die Bohrung 22 in der Verkleidung 21 des Strahltriebwerks 2 eingesteckt werden.

Um eine entsprechende spannende Kraft auf den Zentralteil 10 der Abdeckplane 1 über den Lufteinlauf 20 des Strahltriebwerks 2 ausüben zu können, ist die Klappe 14 so ausgerichtet, dass die breite Seite, die gleichzeitig quasi das Scharnier der Klappe 14 bildet, nach vorn, also entgegen der Flugrichtung des Triebwerks gerichtet ist.

Nahe der Klappe 14 ist eine Tasche 15 aufgenäht, in die der Kugelsperrbolzen 13 bei Nichtgebrauch verwahrt werden kann. Die Tasche 15 ist mittels Klettverschluss verschließbar. Der Kugelsperrbolzen 13 ist mit einem Sicherungsband 16 beispielsweise an einer Schlaufe an der Tasche 15 befestigt, um ein unbeabsichtigtes Herunterfallen und einem Verlust des Sperrbolzens 13 vorzubeugen.

Die Abdeckplane ist aus einem geeigneten wetterfesten Planengewebe hergestellt. Ggf. ist die Plane mehrlagig mit Innenfutter ausgestaltet. Der passgenaue Zuschnitt ist mit einem entsprechenden Schnittmuster und dazu passend ausgestalteten Nähten erstellbar.

### Bezugszeichenliste

- 1: Abdeckplane
- 10: Zentralteil
- 11: Rand
- 12: Durchstecköffnung
- 13: Kugelsperrbolzen
- 14: Klappe
- 15: Tasche
- 16: Sicherungsband

- 2: Strahltriebwerk
- 20: Lufteinlauf
- 21: Verkleidung
- 22: Bohrung

## Patentansprüche

1. Abdeckplane (1) für einen im Wesentlichen kreisrunden Querschnitt aufweisenden Lufteinlauf (20) eines Flugzeugstrahltriebwerks (2), die den Lufteinlauf (20) überdeckt und an in einer Verkleidung (21) des Strahltriebwerks (2) vorgesehenen Bohrungen (22) mittels Kugelsperrbolzen (13) lösbar befestigt ist, **dadurch gekennzeichnet, dass** ein für den Lufteinlauf (20) passender, kappenförmiger Schnitt mit einem umlaufenden Rand (11), der auf der Verkleidung (21) des Strahltriebwerks (2) aufliegt, vorgesehen ist, wobei der Rand (11) bis über die Bohrungen (22) in der Verkleidung (21) reicht und im Rand (11) den Bohrungen (22) zugeordnete Durchstecköffnungen (12) vorgesehen sind.

2. Abdeckplane nach Anspruch 1, **dadurch gekennzeichnet, dass** im Bereich jeder Durchstecköffnung (12) eine Klappe (14) im Rand (11) ausgebildet ist.

3. Abdeckplane nach Anspruch 2, **dadurch gekennzeichnet, dass** die Klappe (14) trapezförmig ausgebildet ist, wobei die Seite der Trapezklappe fest mit dem Rand (11) verbunden ist und nach vorn zeigt.

4. Abdeckplane nach Anspruch 3, **dadurch gekennzeichnet, dass** die Durchstecköffnung (12) zentral in der Klappe (14) angeordnet ist.

5. Abdeckplane nach einem der vorangehenden Ansprüche, **dadurch gekennzeichnet, dass** eine Verwahrtasche (15) für jeden Kugelsperrbolzen (13) auf dem Rand (11) nahe jeder Durchstecköffnung (12) vorgesehen ist.

6. Abdeckplane nach Anspruch 5, **dadurch gekennzeichnet, dass** die Verwahrtasche (15) einen Klettverschluss aufweist.

7. Abdeckplane nach einem der vorangehenden Ansprüche, **dadurch gekennzeichnet, dass** jeder Kugelsperrbolzen (13) mit einem Sicherungsband (16) nahe der jeweiligen Durchstecköffnung (12) am Rand (11) befestigt ist.
